# EUROPEAN PATENT SPECIFICATION

(11) **EP 0 611 670 B1**
(45) Date of publication and mention of the grant of the patent: **13.11.1996**
(21) Application number: 94301065.2
(22) Date of filing: 14.02.1994
(51) Int. Cl.: B60D 1/60

(54) **Towing device**
Anhängevorrichtung
Dispositif d'attelage

(30) Priority: 16.02.1993 GB 9303076
(43) Date of publication of application: 24.08.1994
(73) Proprietor: INDESPENSION LIMITED, Bolton BL1 7AQ (GB)
(72) Inventor: Hargreaves, William, Bolton BL3 4QD (GB)
(74) Representative: Low, Peter John

(56) References cited:
- DE-U- 8 633 616
- GB-A- 1 122 279
- US-A- 3 514 980
- US-A- 5 154 440

## Description

This invention relates to a towing coupling for a trailer.

Towing couplings are well known devices which comprise a body having a socket for receiving the ball of a towing hitch and a releasable lock for retaining the ball in the socket. Such a towing coupling is disclosed in UK Patent Specification No.1122279.

The known towing couplings include a manually operable mechanism which enables the ball of a towing hitch to be received into, or removed from, the socket in the body. It is thus very easy for anyone to steal a trailer by detaching it from the owner's vehicle and coupling it to another vehicle. Indeed many trailers are, in fact, stolen from car parks, trailer parks and the like. There is, therefore, a need to improve the security of trailers.

A simple solution to this problem is to provide means whereby a lock such as a padlock or the like can be fitted to the coupling to prevent the releasable lock from being operated. An example of this arrangement is disclosed in US Patent Specification No.3514980. However, this proposal requires the positive action of fitting the lock. There is a natural human tendency not to bother to fit the padlock on every occasion that the trailer is coupled to a vehicle and, of course, it is on just those occasions when the coupling is not so locked that the trailer is stolen.

The present invention has been made with this problem in mind.

A towing coupling comprising a body having a socket for receiving the ball of a towing hitch, a latch for retaining the ball in the socket, the latch being movable between a ball retaining position and a ball releasing position, means for urging the latch towards the ball retaining position, a manually operable locking means for retaining the latch in the ball retaining position and a key operated locking means also for retaining the latch in the ball retaining position, characterised in that the key operated locking means is permanently secured to the body, the normal position of said key operated locking means being to hold the latch in the ball retaining position and requiring operation with a key to release the latch.

In a preferred embodiment of the invention the latch is pivotally mounted on the body. The manually operable locking means preferably comprises means linking the latch to the body to prevent movement of the latch. The key operated locking means also preferably links the latch to the body to prevent movement of the latch. Both manually operable and key operated locking means must be released to enable the latch to be moved to free the ball of a towing hitch from the socket or admit the ball of a towing hitch into the socket.

The key operated locking means is preferably of the plunger lock type which is released or unlocked by withdrawing a plunger after turning a key. Both the manually operable locking means and the key operated locking means are provided with means for urging them into the locking condition.

A specific embodiment of the invention will now be described by way of example with reference to the accompanying drawings in which:-
- Fig.1: is a longitudinal vertical section through a coupling;
- Fig.2: is a plan view of the coupling of Fig.1;

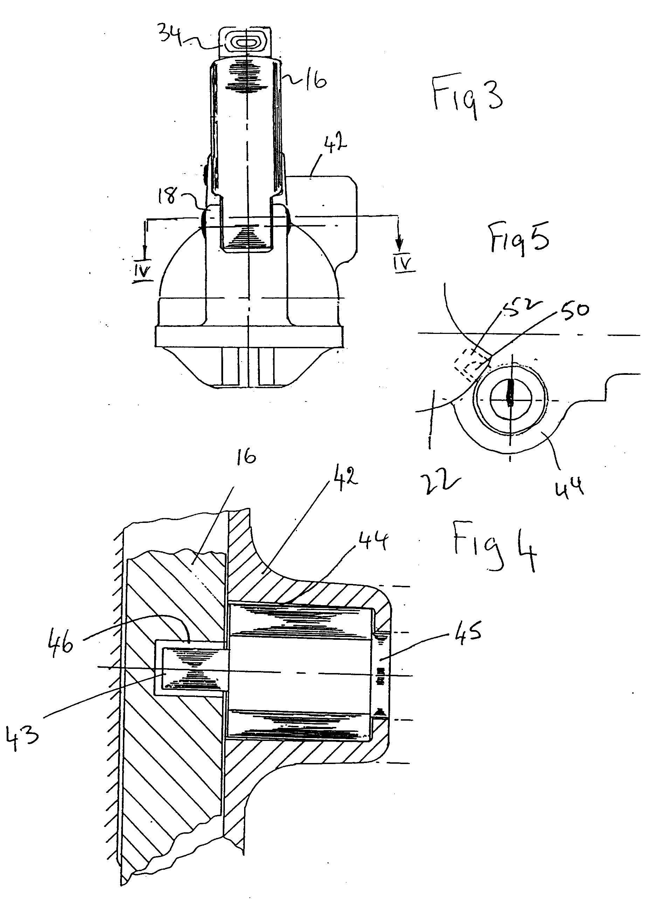

- Fig.3: is a front elevation of the coupling of Fig.1;
- Fig.4: is a part section on the line IV-IV of Fig.3; and
- Fig.5: is a detail of a modified key operated locking means.

Referring to the drawings the coupling comprises a body 10, preferably of cast metal. Apertures, one of which referenced 12 can be seen, are provided towards the rear of the coupling for receiving a bolt or the like for securing the coupling to the draw bar of a trailer. For greater security to prevent the coupling being separated from the draw bar the bolt head or nut can be surrounded by bushes of hardened steel with end caps. A special socket which can fit inside the bush is needed to tighten or release the bolt. At the front of the coupling on the underside thereof a part spherical socket 14 is provided.

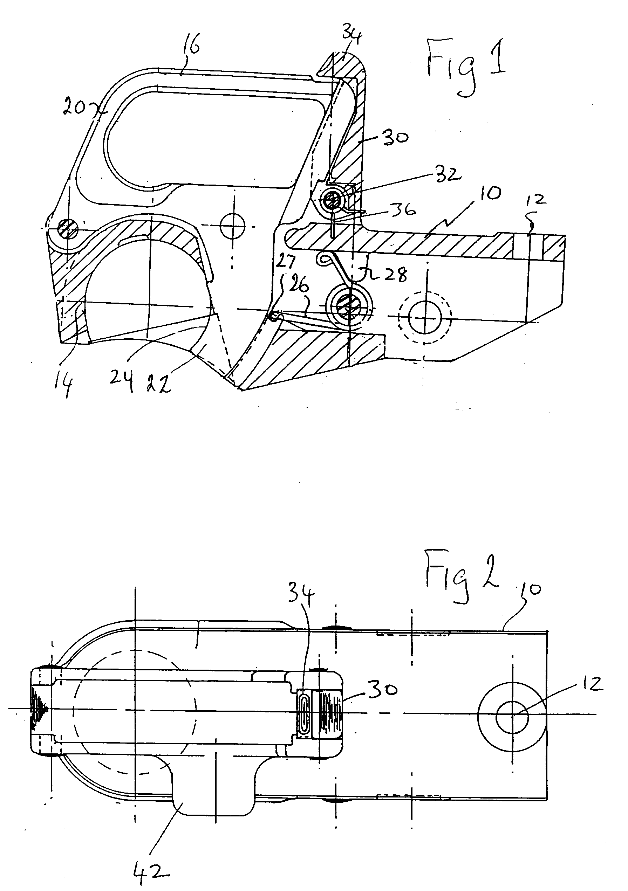

A latch member 16 is pivotally mounted in a yoke 18 at the front of the body. The latch member includes a handle 20 and a locking arm 22 which extends downwardly through a slot in the body. The locking arm 22 has a part spherical surface 24 which has substantially the same radius as the spherical surface of the socket 14. When the latching member is in the position shown in Fig.1 the surface 24 is on substantially the same centre as that of the socket. In this condition the ball of a towing hitch cannot be introduced into, or removed from, the socket. To do that the latch member is pivoted anti-clockwise as viewed in Fig.1 thereby enlarging the entry into the socket. When the ball of a towing hitch is located in the socket the latch member is pivoted clockwise thereby holding the ball in the socket. This type of construction is well known.

As can be seen in Fig.1 the latch member 20 is urged into the locking position (i.e. clockwise) by a torsion spring 26 which acts against the side 27 of the arm 22 remote from the surface 24 and also acts against a suitably profiled member 28 inside the coupling body.

A manually operable locking arm 30 is pivotally mounted at 32 onto the body 10. A catch 34 is provided at the free end of locking arm 30, which catch engages the top of the handle 20 to prevent the latch from being moved. The locking arm 30 is urged anti-clockwise into the locked position by means of a spring 36. It can be seen that in order to rotate the latch member anti-clockwise to enable the ball of a towing hitch to be located in, or removed from, the socket 14, the catch 34 of locking arm 30 must first be disengaged from the handle 20 by rotating the locking arm 30 clockwise around the pivot 32. Having disengaged the locking arm 30 the latch member can be rotated anti-clockwise.

Even with the two locking arrangements just described, the coupling is not secure and can be operated by unauthorised persons. A third locking means is, therefore, provided which is key operated. A boss 42 is provided on the side of the coupling body. A bore 44 extends through the boss. A bore 46 in the latch member 16 registers with bore 44 when the latch member is in the locking position as shown in Fig.1. A plunge lock 45 is provided in the boss 42, the plunger 43 of the plunge lock extending into bore 46 in the latch member. The bore 44 and corresponding outer surface of the plunge lock are preferably not circular so that the lock cannot rotate in the bore.

In order to free the latch member the plunge lock must be unlocked using a key and the plunger 43 withdrawn from bore 46. Preferably the plunger lock is of the kind which is biased into the locking position and which will permit the latch member to be moved into the locking position to receive the plunger 43 into bore 46 without operation of the key. In other words no special steps are necessary in order to ensure that the latch member is locked by the key operated lock. Secure locking of the coupling is effected automatically when the latch in in or returned.

The invention is not restricted to the above described embodiment and many variations and modifications are possible. For example, as shown in Fig.5 the plunge lock can be replaced by a ratchet lock having a locking member 50 which is received in a recess 52 in the arm 22 of the latch member.

## Claims

1. A towing coupling comprising a body (10) having a socket (14) for receiving the ball of a towing hitch, a latch (16) for retaining the ball in the socket, the latch being movable between a ball retaining position and a ball releasing position, means (26) for urging the latch towards the ball retaining position, a manually operable locking means (34) for retaining the latch in the ball retaining position and a key operated locking means (45) also for retaining the latch in the ball retaining position, characterised in that the key operated locking means is permanently secured to the body, the normal position of said key operated locking means being to hold the latch in the ball retaining position and requiring operation with a key to release the latch.

2. A coupling as claimed in Claim 1, wherein the latch is pivotally mounted on the body.

3. A coupling as claimed in Claim 1 or Claim 2, wherein the manually operable locking means comprises means linking the latch to the body to prevent movement of the latch.

4. A coupling as claimed in any preceding claim, wherein the key operated locking means is adapted to link the latch to the body to prevent movement of the latch.

5. A coupling as claimed in any preceding claim, wherein the key operated locking means comprises a plunge lock, said plunge lock comprising a plunger which is receivable in a bore in the latch to prevent movement of the latch, withdrawal of the plunger from said bore requiring operation of the lock with the key.

6. A coupling as claimed in any preceding claim, wherein the key operated lock includes means urging it into the locking condition.

7. A coupling as claimed in any preceding claim, wherein the manually operable locking means includes means urging it into the locking condition.

8. A coupling as claimed in any preceding claim, wherein the key operated locking means automatically locks the latch against movement when the latch is in, or returns to, the ball retaining position.

## Patentansprüche

1. Anhängerkupplung umfassend einen Körper (10) mit einer Hülse (14) zur Aufnahme der Kugel einer Anhängerzugvorrichtung, einer Einschnappklinke (16) zum Zurückhalten der Kugel in der Hülse, wobei die Einschnappklinke zwischen einer Kugelrückhalteposition und einer Kugelfreigabeposition bewegbar ist, Mitteln (26), um die Einschnappklinke in Richtung der Kugelfreigabeposition zu drücken, einem per Hand betätigbaren Verschlußmittel (34) zum Zurückhalten der Einschnappklinke in der Kugelrückhalteposition und einem per Schlüssel betätigbaren Verschlußmittel (45) ebenfalls zum Zurückhalten der Einschnappklinke in der Kugelrückhalteposition,
dadurch gekennzeichnet,
daß das per Schlüssel betätigbare Verschlußmittel fest mit dem Körper verbunden ist, wobei die normale Position des per Schlüssel betätigbaren Verschlußmittels darin besteht, die Einschnappklinke in der Kugelrückhalteposition zu halten, und eine Betätigung mit einem Schlüssel erfordert, um die Einschnappklinke freizugeben.

2. Kupplung nach Anspruch 1,
dadurch gekennzeichnet,
daß die Einschnappklinke schwenkbar auf dem Körper montiert ist.

3. Kupplung nach Anspruch 1 oder 2,
dadurch gekennzeichnet,
daß das per Hand betätigbare Verschlußmittel ein Mittel umfaßt, das die Einschnappklinke mit dem Körper verbindet, um eine Bewegung der Einschnappklinke zu verhindern.

4. Kupplung nach einem der vorangegangenen Ansprüche,
dadurch gekennzeichnet,
daß das per Schlüssel betätigbare Verschlußmittel dazu geeignet ist, die Einschnappklinke mit dem Körper zu verbinden, um eine Bewegung der Einschnappklinke zu verhindern.

5. Kupplung nach einem der vorangegangenen Ansprüche,
dadurch gekennzeichnet,
daß das per Schlüssel betätigbare Verschlußmittel einen Tauchverschluß umfaßt, der einen Tauchkolben aufweist, der in einer Bohrung in der Einschnappklinke aufgenommen ist, um eine Bewegung der Einschnappklinke zu verhindern, wobei der Rückzug des Tauchkolbens aus der Bohrung die Betätigung des Verschlusses mit dem Schlüssel erfordert.

6. Kupplung nach einem der vorangegangenen Ansprüche,
dadurch gekennzeichnet,
daß der per Schlüssel betätigbare Verschluß Mittel umfaßt, die ihn in die Verschlußposition drücken.

7. Kupplung nach einem der vorangegangenen Ansprüche,
dadurch gekennzeichnet,
daß der per Hand betätigbare Verschluß Mittel umfaßt, die ihn in die Verschlußposition drücken.

8. Kupplung nach einem der vorangegangenen Ansprüche,
dadurch gekennzeichnet,
daß das per Schlüssel betätigbare Verschlußmittel automatisch die Einschnappklinke gegen Bewegung verschließt, wenn die Einschnappklinke sich in der Kugelrückhalteposition befindet oder in diese zurückkehrt.

## Revendications

1. Accouplement de remorquage comprenant un corps (10) ayant une coquille (14) destinée à recevoir la noix d'un attelage de remorquage, un verrou (16) destiné à retenir la noix dans la coquille, le verrou étant déplaçable entre une position de retenue de noix et une position de libération de noix, un moyen (26), pour pousser le verrou vers la position de retenue de noix, un moyen de verrouillage (34) à actionnement manuel destiné à retenir le verrou dans la position de retenue de noix et un moyen de verrouillage (14) actionné par clef, également conçu pour retenir le verrou dans la position de retenue de la noix, caractérisé par le fait que le moyen de verrouillage à actionnement par clef est assuré en permanence sur le corps, la position normale dudit moyen de verrouillage actionnée par clef consistant à maintenir le verrou dans la position de retenue de noix et une clef étant nécessaire pour permettre la libération du verrou.

2. Accouplement selon la revendication 1, dans lequel le verrou est monté pivotant sur le corps.

3. Accouplement selon la revendication 1 ou 2, dans lequel le moyen de verrouillage à actionnement manuel comprend un moyen assurant l'articulation du verrou sur le corps afin d'empêcher tout déplacement du verrou.

4. Accouplement selon l'une quelconque des revendications précédentes, dans lequel le moyen de verrouillage actionné par clef est adapté pour relier le verrou au corps afin d'empêcher tout déplacement du verrou.

5. Accouplement selon l'une quelconque des revendications précédentes, dans lequel le moyen de verrouillage actionné par clef comprend un verrou à gâchette, ledit verrou à gâchette comprenant une gâchette susceptible d'être logée dans un perçage ménagé dans le verrou afin d'empêcher tout déplacement du verrou, l'extraction de la gâchette vis-à-vis dudit perçage demandant l'utilisation d'une clef pour faire fonctionner le verrou.

6. Accouplement selon l'une quelconque des revendications précédentes, dans lequel le verrou actionné par clef comprend un moyen le rappelant à l'état de verrouillage.

7. Accouplement selon l'une quelconque des revendications précédentes, dans lequel le moyen de verrouillage à possibilité de fonctionnement manuel comprend un moyen le rappelant à l'état de verrouillage.

8. Accouplement selon l'une quelconque des revendications précédentes, dans lequel le moyen de verrouillage actionné par clef assure un verrouillage automatique du verrou contre tout déplacement lorsque le verrou se trouve à la position de retenue de la noix ou bien retourne à cette position.
